# EUROPEAN PATENT APPLICATION

(11) **EP 2 709 047 A1**
(43) Date of publication of application: **19.03.2014**
(21) Application number: 13184647.9
(22) Date of filing: 16.09.2013
(51) Int. Cl.: G06Q 10/10

(54) **Utility management analysis through social network data**

(30) Priority: 17.09.2012 US 201213621712
(71) Applicant: General Electric Company, Schenectady, New York 12345 (US)
(72) Inventor: Fan, Hua, Atlanta, GA 30339 (US); Mucklow, Blaine Madison, Atlanta, GA 30339 (US); San Andres, Ramon Juan, Atlanta, GA 30339 (US); Lewkovich, Robert Michael, Atlanta, GA 30339 (US); Igunbor, Osahun, Atlanta, GA 30339 (US); Garrity, Jonathan Tompkins, Atlanta, GA 30339 (US); Dam, Quang Binh, Atlanta, GA 30339 (US)
(74) Representative: Cleary, Fidelma

(57) **Abstract**

Systems and methods for utility management using social network data are provided. A social media analysis system (42) filters social media posts of various social media networks to ascertain social media posts (162) relevant to a utility network (10) and determine if a utility network event has occurred based on the social media posts (162). Additionally, the social media analysis system associates relevant social media posts (162) with locations on the utility network (10).

## Description

### BACKGROUND

The subject matter disclosed herein relates to utility management systems and, more particularly, to methods and systems for utility management using social network data.

Utility outages can be very expensive both to consumers and the utility companies that serve them. As such, it is in the utility companies' best interests to locate and repair such outages as quickly and as economically as possible. Utility companies may also be interested in other information relating to the utility network, such as suspicious activity or utility damages and hazards. Conventionally, utility outages, such as power outages, and other damages or hazards are identified by landline telephone calls from customers in an affected area. Younger customers, however, are increasingly likely not to have landline telephone service. It may be more difficult to identify the location of a customer using a non-landline telephone, such as a cellular or Voice Over Internet Protocol (VOIP) telephone. Other techniques for identifying utility outages and other hazards have been developed that do not rely on landline telephone calls. Many of these techniques may involve sensors placed throughout the utility service area. These sensors, however, may be a very expensive investment for many utility companies.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in a computer-implemented method comprising filtering social media posts of a social media network to ascertain social media posts relevant to a utility network. The method also includes determining that a utility network event has occurred based at least in part on the relevant social media posts.

In a second aspect, the invention resides in a computer program comprising computer program code means adapted to perfrom the method when executed by a computer and in the computer program embodied on a computer-readable medium.

In a third aspect, the invention resides in a computer and system including a storage configured to store the above computer program and processor to execute the computer program to perform the above method.

### DRAWINGS

These and other features, aspects, and advantages of the present invention will become better understood when the following detailed description is read with reference to the accompanying drawings in which like characters represent like parts throughout the drawings, wherein:
FIG. 1 is a block diagram of a utility network that employs a power grid social media analysis system using social network data, according to an embodiment of the present approach;
FIG. 2 is a flowchart of a method for associating social media accounts with utility customer information accounts using utility account information, according to an embodiment of the present approach;
FIG. 3 is a flowchart of a method for associating social media accounts with utility customer information accounts using geolocation of social media posts, according to an embodiment of the present approach;
FIG. 4 is a flowchart of a method for detecting utility outages using the outage detection system, according to an embodiment of the present approach; and
FIG. 5 is a system-level diagram of the outage detection system, according to an embodiment of the present approach;
FIG. 6 is a flowchart of a method for detecting and displaying social media posts on a map of the utility network, according to an embodiment of the present approach;
FIG. 7 illustrates a map showing the location of social media posts relating to the utility network as a whole in relation to the utility network, according to an embodiment of the present approach;
FIG. 8 is a flowchart of a method for detecting and displaying social media posts relating to damage to the utility network on a map of the utility network, according to an embodiment of the present approach;
FIG. 9 illustrates a map showing the location of social media posts relating to damage to the utility network in relation to the utility network, according to an embodiment of the present approach;
FIG. 10 is a flowchart of a method for detecting and displaying social media posts relating to suspicious activity around the utility network on a map of the utility network, according to an embodiment of the present approach; and
FIG. 11 illustrates a map showing the location of social media posts relating to suspicious activity around the utility network in relation to the utility network, according to an embodiment of the present approach.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Present embodiments relate to a utility management system configured to take advantage of existing social network services. Among other things, the utility management system may help detect and locate utility network events. As used herein, the term "utility network event" refers to any occurrence that may impact utility management or service, such as utility outages, suspicious activity, utility hazards, or other utility-related information without the expensive investment of time and money in sensor technology. Some embodiments may provide utility companies (e.g., electrical utilities, water and sewer utilities, gas delivery utilities, and/or telephone and data) with an outage detection, location and analysis tool at a fraction of the cost of sensor-based systems. Particularly, the utility management system described below uses a social mining engine to obtain and filter data from a variety of social networking services. The social mining engine may query and filter the social networking data looking for items that may be relevant to the utility. Geographical data may also be supplied by the social networking service.

In the context of outage detection, the social networking data may be analyzed with data supplied by an outage management system in an outage analysis engine. This data is compared to a model of the network to determine the location of a fault, the blacked-out area caused by a fault, and the possible causes of a fault. The information generated by the outage analysis engine may be summarized and presented immediately in a suitable format to operators, dispatch crews and other interested parties. The analysis engine also may identify the individual sources of the social networking data used for the analysis. The source information may be used to provide incentives to the utility users that provided the information.

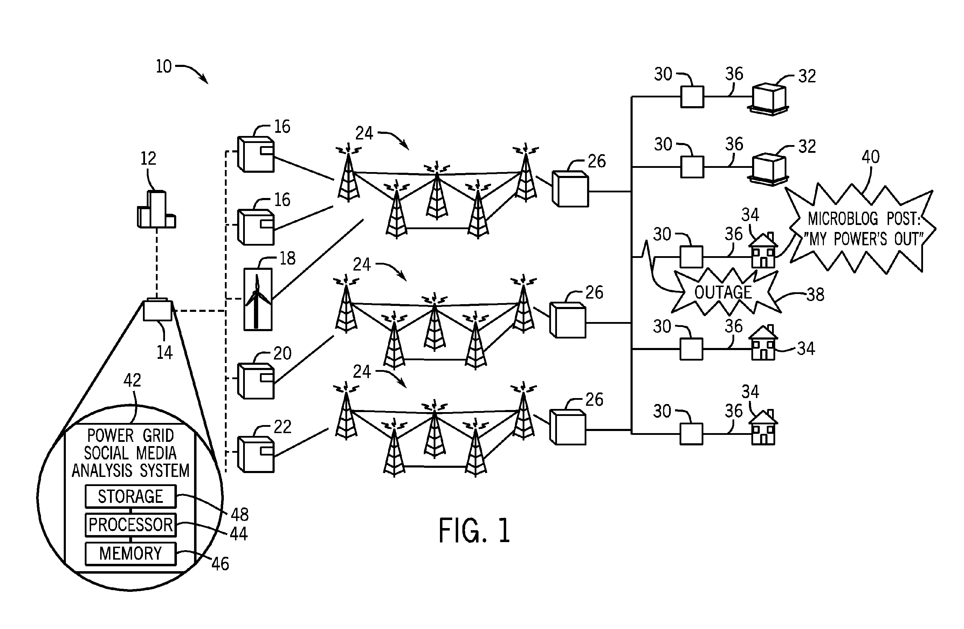

With the foregoing in mind, it may be useful to describe an embodiment of a utility management system that uses social media, here shown in the context of outage detection, such as illustrated in FIG. 1. It is to be noted that the systems and methods described herein may apply to a variety of infrastructure, including but not limited to power transmission and distribution infrastructure, gas delivery infrastructure, and various liquid (e.g., water) delivery infrastructures. As depicted, the utility network 10 may include one or more utilities 12. The utility 12 may provide for oversight operations of the utility network 10. For example, utility control centers 14 may monitor and direct power produced by one or more power generation stations 16 and alternative power generation stations 18. The power generation stations 16 may include conventional power generation stations, such as power generation stations using gas, coal, biomass, and other carbonaceous products for fuel. The alternative power generation stations 18 may include power generation stations using solar power, wind power, hydroelectric power, geothermal power, and other alternative sources of power (e.g., renewable energy) to produce electricity. Other infrastructure components may include a water power producing plant 20 and geothermal power producing plant 22. For example, water power producing plants 20 may provide for hydroelectric power generation, and geothermal power producing plants 22 may provide for geothermal power generation.

The power generated by the power generation stations 16, 18, 20, and 22 may be transmitted through a power transmission grid 24. The power transmission grid 24 may cover a broad geographic region or regions, such as one or more municipalities, states, or countries. The transmission grid 24 may also be a single phase alternating current (AC) system, but most generally may be a three-phase AC current system. As depicted, the power transmission grid 24 may include a series of towers to support a series of overhead electrical conductors in various configurations. For example, extreme high voltage (EHV) conductors may be arranged in a three conductor bundle, having a conductor for each of three phases. The power transmission grid 24 may support nominal system voltages in the ranges of 110 kilovolts (kV) to 765 kilovolts (kV). In the depicted embodiment, the power transmission grid 24 may be electrically coupled to a power distribution substation and grid 26. The power distribution substation and grid 26 may include transformers to transform the voltage of the incoming power from a transmission voltage (e.g., 765 kV, 500kV, 345kV, or 138kV) to primary (e.g., 13.8kV or 4160V) and secondary (e.g., 480V, 240V, or 120V) distribution voltages. For example, industrial electric power consumers (e.g., production plants) may use a primary distribution voltage of 13.8kV, while power delivered to commercial and residential consumers may be in the secondary distribution voltage range of 120V to 480V.

As again depicted in FIG. 1, the power transmission grid 24 and power distribution substation and grid 26 may be part of the utility network 10. Accordingly, the power transmission grid 24 and power distribution substation 26 may include various digital and automated technologies to control power electronic equipment such as generators, switches, circuit breakers, reclosers, and so forth. The power transmission grid 24 and power distribution substation and grid 26 may also include various communications, monitoring, and recording devices such as, for example, programmable logic controllers (PLCs) and electric fault sensing protective relays. For example, during storms, a protective relay on the grid 26 may detect an electrical fault downstream of the substation, and operate a circuit breaker to allow the fault to clear and restore electric power. In certain embodiments, the power transmission grid 24 and power distribution substation and grid 26 may also deliver power and communicate data such as changes in electric load demand to a metering system 30. In certain embodiments, the metering system 30 may be an advanced metering infrastructure (AMI) meter used to collect, measure, and analyze electric power usage and/or generation. In other embodiments, the metering system 30 may simply record consumption in conventional ways.

As mentioned above, in certain embodiments, a disruption may cause an outage 38, effectively causing power loss to a group of residences 34. Upon losing power, a group of residents may send posts 40 out on social networking sites that include text 41 or other forms of data to indicate their power is out. Data that may indicate a power outage may include keywords, specific textual tags (e.g. #outage, @powerout, etc.), photos or videos of an area affected by an outage, voice messages describing a power outage, and so forth. The social networking sites may include, for example, Twitter, Facebook, Google+, app.net, blogs, or other sources of public information such as traffic information or local news sites. A power grid social media analysis system 42 may use public or private social network posts such as these to identify an outage, as discussed further below. The power grid social media analysis system 42 may use a processor 44 with instructions stored in a memory 46 coupled to the processor 44. The instructions may configure the processor 44 to mine the social data networks for posts relevant to the utility network 10. Upon processing the data of the social networking post 40, the processor 44 may determine the data is relevant to the utility network 10 and may store the message 40 in storage 48.

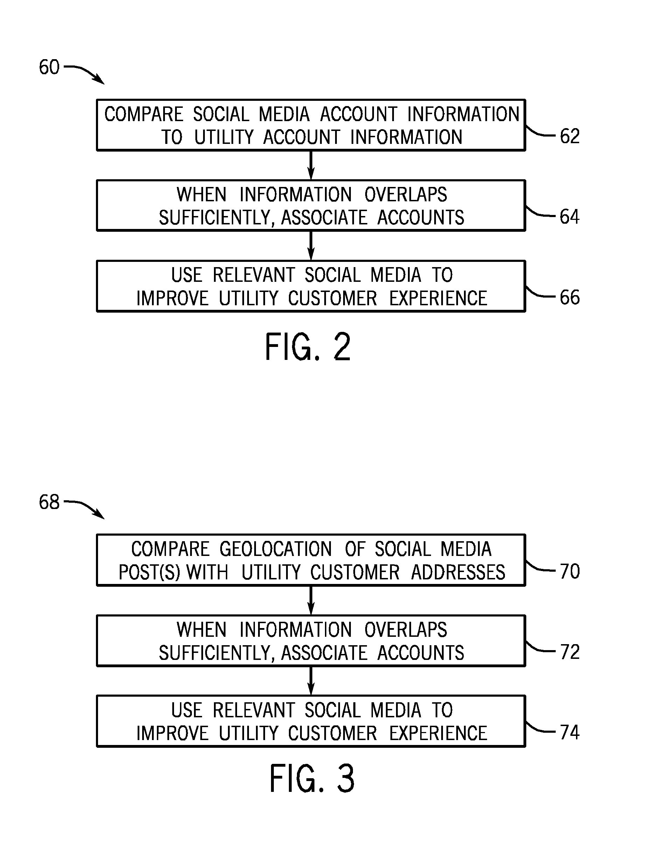

In certain embodiments of the present disclosure, associating a utility customer's social media account with a utility customer account may improve the reliability of the social media detection system. Accordingly, FIG. 2 and FIG. 3 illustrate flowcharts 60, 68 of methods that may be implemented to associate a utility customer's social media account with utility customer information accounts. A processor executing tangible, non-transitory, machine-readable instructions (e.g., the processor 44) may compare social media account information to utility account information as represented by block 62. The social media account information may include a user's name, email address, birthday, and phone number, among other personal information. The utility account information may include a customer's name, email address, phone number, physical address, and age among other personal information. The processor may utilize the application programming interface (API) of one or more social networks to process the information of a given social media account and extract the social media account information mentioned above and compare the information to accounts in the utility company's customer database. As represented by block 64, when the social media account information and the utility account information overlap, the social media account is associated with the utility customer account. As will be described later, the processor may use associated and relevant social media accounts to improve utility customer experience, as represented by block 66.

In contrast to FIG. 2, FIG. 3 illustrates a flowchart 68 that utilizes geolocation data to associate social media accounts with utility customer accounts. Social media posts may include geolocation data that indicates the location where the post was made. The geolocation data may include the latitude and longitude of the location where the post was made, the city where the post was made, or other forms of location-indicating data. The processor may use the geolocation data of one or more social media posts from a given social media account to match the social media account to a utility customer account. The processor may look for a concentration of post locations over a period of time near a geolocation and use probit or fuzzy logic to determine if the locations of the posts may be associated with an address of a utility customer account, as represented by block 70. If the post location data and the address in a utility customer account sufficiently overlap, the processor may associate the accounts, as represented by block 72. As will be described later, the processor may use associated and relevant social media accounts to improve utility customer experience, as represented by block 74.

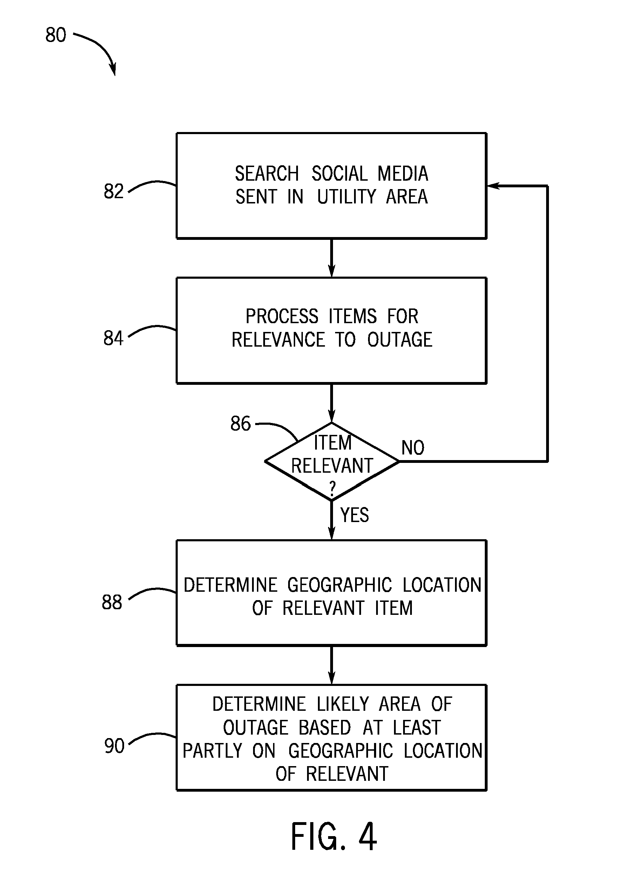

Referring back to FIG. 1, further detail of the logic that may be executed by the processor 44 on power grid social media analysis system 42 is depicted as a flow chart 80 in FIG. 4. In order to acquire data, the processor 44 may search social network data in a given utility area, as represented by block 82. The social networking sites may include Twitter, Facebook, Google+, app.net, blogs, or other sources of public information such as traffic information or local news sites. The processor 44 may continually search social networking sites. The processor 44 may also search social networking sites periodically. For instance, the processor 44 may search the social networking site(s) every 30 seconds, 1 minute, 2 minutes, 5 minutes, 10 minutes, 20 minutes, or any other suitable amount of time.

In some embodiments, the processor 44 may request certain social network data by way of an application programming interface (API). For example, the processor 44 may request only social network data posted within a geographic area served by the utility power transmission grid 24 and within some recent amount of time. To provide a few examples, the processor 44 may request only social network data posted within the previous 30 seconds, 1 minute, 2 minutes, 5 minutes, 10 minutes, 20 minutes, 30 minutes, 1 hour, 2 hours, or any other suitable amount of time.

The processor 44 may process the social network data, filtering the social network data for data that may indicate a power outage, as represented by block 84. Data that may indicate a power outage may include keywords, specific textual tags (e.g. #outage, @powerout, etc.), or may involve more sophisticated text analysis, voice analysis, photo analysis, and/or video analysis. For each piece of social networking data, the processor 44 may decide if the data is relevant to a power outage or not, as represented by block 86. If an item is not relevant, the processor 44 may discard the piece of data and continue searching social network data 82. If an item is deemed relevant to a power outage, the processor 44 may acquire additional data from the post, if available, that may determine the geographic location of the original data post, as represented by block 88. The processor 44 may use the geographical data to determine a likely area of outage, as represented by block 90. The processor 44 may also determine the location and cause of a fault that caused the area of outage, as will be described below.

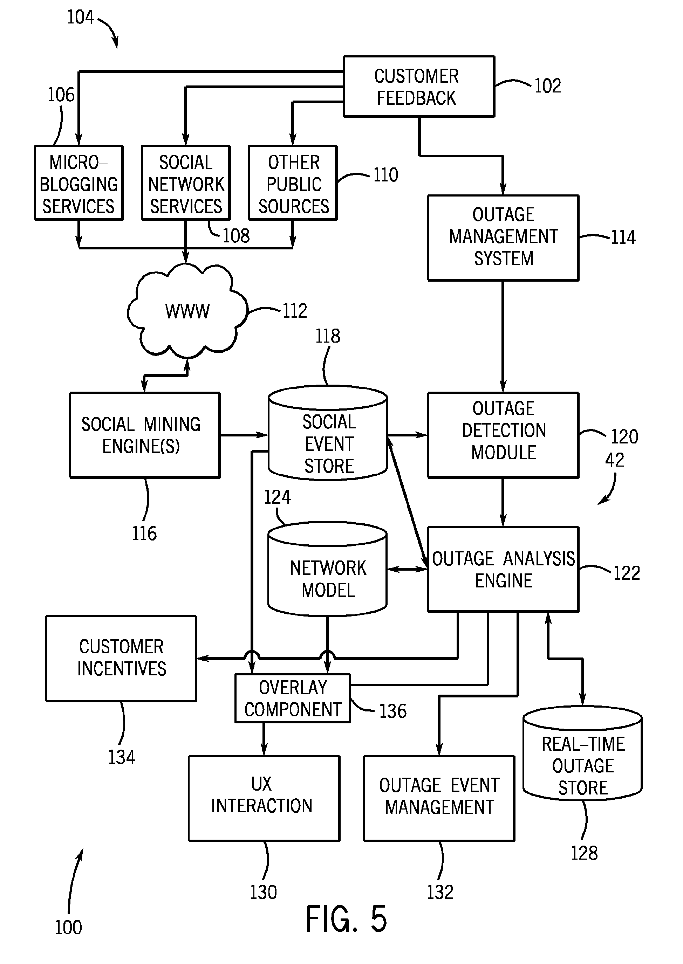

Turning now to FIG. 5, a system-level diagram is presented, illustrating the logical components of a social media analysis system 100. Some of the components of the social media analysis system 100 may be separate physical components that perform the tasks outlined, or they may represent separate logical components running on one or more processing units, such as the processor 44. Customers 102 may be prompted by a power outage to provide feedback to a utility company. The feedback may take the form of phone calls to the utility company, social media posts 104 specifically directed at the utility company, or social media posts 104 not specifically directed at the utility company. Phone calls to the utility company may be received by an outage management system 114. Social media posts 104 may take the form of micro-blogging services 106 such as Twitter or app.net, social network services 108 such as Facebook or Google+, or other public sources 110 such as traffic information or local news sites. The social media posts 104 may be publicly or privately available on the Internet 112 or any other suitable networks.

A social mining engine 116 may search and process data from the Internet 112 for data in social media posts 104 that would indicate a power outage. The social mining engine 116 may also search the Internet 112 for data in social media posts 104 periodically over a range of times. The range of times may include searching the social networking sites every 30 seconds, 1 minute, 2 minutes, 5 minutes, 10 minutes, 20 minutes, or any other suitable amount of time. The social mining engine 116 may also employ a threshold to limit how far back in time the data in social media posts 104 is considered relevant. The threshold may extend back 30 seconds, 1 minute, 2 minutes, 5 minutes, 10 minutes, 20 minutes, 30 minutes, 1 hour, 2 hours, or any other suitable amount of time. Depending on the social networking service 108, the data may be streamed to the social mining engine 116 (e.g., if the service supports streaming of queries), or it may be actively retrieved by a spider-like system (e.g., in the case of graph-based social networks). The social mining engine 116 may use social media APIs to search posts from specific geographical locations. Any data that may be deemed relevant to a power outage by the social mining engine 116 may be stored in the social event store 118. Data that may be deemed relevant to a power outage may include the use of specific textual tags (e.g., #outage, @powerout, etc.), or it may involve more sophisticated linguistic text analysis (for text analysis), voice analysis (for audio posts), or video analysis (for pictures and video posts). The social mining engine may store social media posts 104 that include geographical data. The geographical data may include the location of where customers are providing feedback 102 about a power outage. If geographical data is available for a given social media post 104, the geographical data may be stored with the social network data in the social event store 118.

An outage detection component 120 may receive data from both the outage management system 114 and the social event store 118 to determine the occurrence of a power outage. Data from the outage management system 114 and the social event store 118 may be determined to be related to the same outage event, and may cause the outage detection component 120 to invoke an outage analysis engine 122. The outage analysis engine 104 may extract all records from the social event store 118 deemed to belong to the same outage. The outage analysis engine may analyze the records from the social event store against a network model 124 to determine the location of the fault on the network, a blacked-out area caused by the fault, and possible causes of the fault. Possible causes of the fault may be determined from the linguistic analysis of text/voice data, or by photo/video posts.

In the present embodiment, the outage analysis engine may store the outage data in a real time outage store 128. The outage analysis engine may display outage data to a user experience interaction interface 130 and present the outage data in a suitable format to an outage event management group 132. The suitable format for the outage data may include but not be limited to a mobile application, text message, or web application. The outage event management group 132 may include operators, dispatch crews, or other interested parties.

The outage analysis engine 122 may identify the individual sources of the social networking data and provide the identity of the sources to a customer incentive component 134. The customer incentive component may use the customer identity data to provide incentives (e.g. discounts) to utility users or use the customer identity data in other ways. In some embodiments, the customer incentive component 134 may send a relevant reply to the social media posts made by utility users.

The example of FIG. 5 and/or other embodiments of the social media analysis system 100 may include an overlay component 136 that may receive social media data from the social event store 118 and network data from the network model 124. The overlay component 136 may determine the location of one or more social media posts and overlay the posts on a map determined by the network model 124. The overlay component 136 may use geolocation data included in a social media post 40 to determine the location of a post. Additionally, if the social media account that posted the social media post 40 is associated with a utility customer account, the overlay component 136 may use the customer address listed in the utility customer account to determine the location of a post. The map may be displayed on the user experience interaction interface 130.

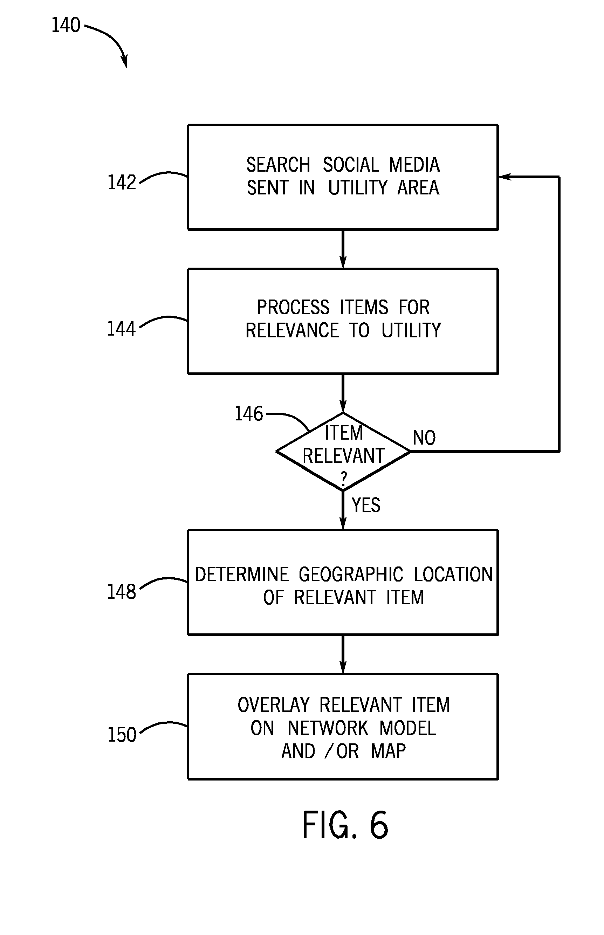

Like FIG. 4, FIG. 6 is a flowchart 140 that illustrates logic that may be executed by the processor 44 of the power grid social media analysis system 42. Accordingly, FIG. 6 includes several blocks that closely correspond with blocks in FIG. 4. However, FIG. 6 includes logic that utilizes the overlay component 136 of FIG. 5. As shown before in block 82 of FIG. 4, the processor 44 may search social media data in a given utility area in order to acquire data, as represented by block 142. Likewise, block 144 may correspond to block 84 of FIG. 4. However, in block 84, the processor 44 may be filtering the social media data for data that may indicate a power outage, while in block 144 the processor 44 may be filtering the social media data for data that may indicate relevance to the utility as a whole. As represented by block 146, the processor 44 may determine if the social media data is relevant to the utility or not. As before, if an item is not relevant, the processor 44 may discard the piece of data and continue searching social media data 142. If an item is deemed relevant to the utility, the processor 44 may acquire additional data from the post, if available, that may determine the geographic location of the original data post, as represented by block 88 of FIG. 4 and block 148 of FIG. 6. The relevant post may then be overlaid on the network model, the map, or a combination thereof, and may be displayed on the user experience interaction interface 130, as represented by block 150.

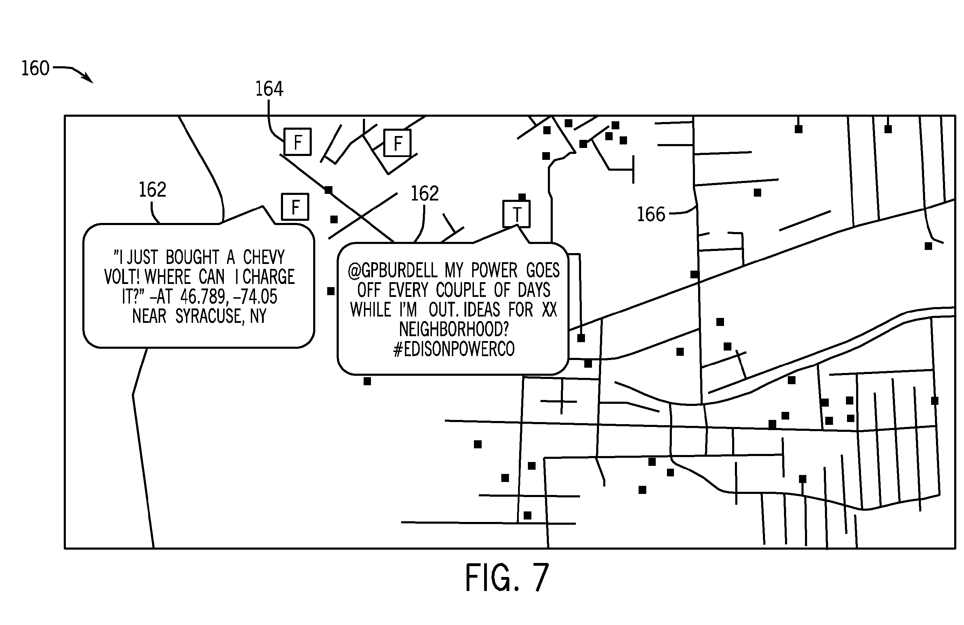

Turning to FIG. 7, a map 160 such as the map that may be displayed on the user experience interaction interface 130 is illustrated with relevant social media posts 162 (e.g., posts relating to power outages or electric cars, as shown in FIG. 7). In certain embodiments, the map 160 may be two-dimensional, and in other embodiments, the map 160 may be three-dimensional. The map 160 may include social media icons 164 to indicate the specific social networks from which the posts were mined. The content of a specific post may be shown when a user activates one or more of the social media icons 164. Additionally, the map displays the utility network 166 for the map area to give the location of each social media post context in relation to the utility network 166 as a whole. Some of the social media posts may be displayed on the map 160 based on geolocation data included with the post, and other social media posts may be displayed on the map 160 based on an address in the utility customer account associated with the social media account that posted the post.

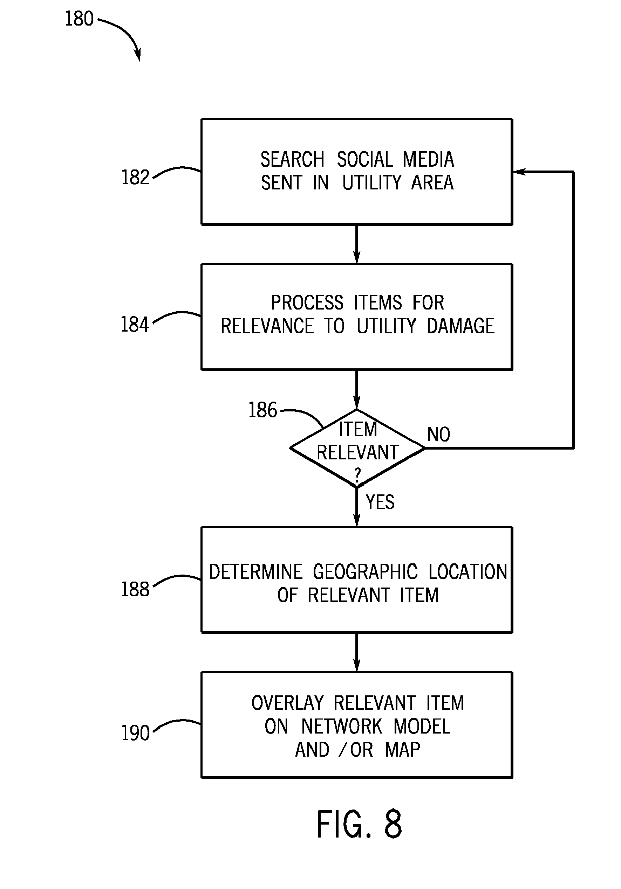

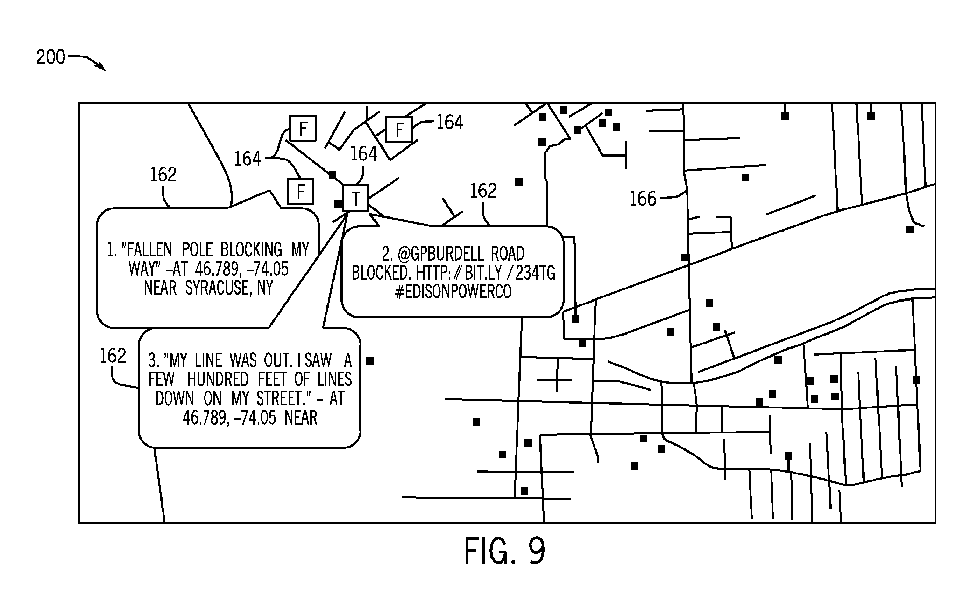

The social media analysis system 42 may be utilized to detect damage to the utility network or suspicious activity around the utility network as well as detecting power outages. FIG. 8 illustrates a flowchart 180 that closely corresponds to the flowcharts illustrated in FIG. 4 and FIG. 6. Specifically, block 182 corresponds to block 142 in FIG. 6 and block 82 in FIG. 4. Likewise, block 184 corresponds to block 144 in FIG. 6 and block 84 in FIG. 4. However, in the method illustrated in FIG. 8, the processor 44 may filter the social media posts 40 for data relating to damage to utility assets, such as fallen poles or lines, equipment on fire, and other hazards. While filtering the social media posts 40, the processor 44 may scan each post for keywords, pictures, videos, and other data that would indicate signs of damage to the utility network. Blocks 186, 188, and 190 of FIG. 8 directly correspond to blocks 146, 148, and 150 of FIG. 6. The processor 44 may determine if the social media posts 40 are relevant, determine the geographic location of each relevant post, and overlay the relevant post on the network model or map displayed on the user experience interaction interface 130. Additionally, the processor 44 may store a location and hazard pair in storage 48 when a social media post is determined to relate to a utility network hazard. The stored pairs of location and hazard pairs may be utilized to improve the accuracy of hazard and damage detection in future social media posts. FIG. 9 illustrates a map 200 that may be displayed on the user experience interaction interface 130 including the same components of the map 160 of FIG. 7. However, the social media posts 162 of FIG. 9 relate specifically to utility network hazards rather than the utility network as a whole.

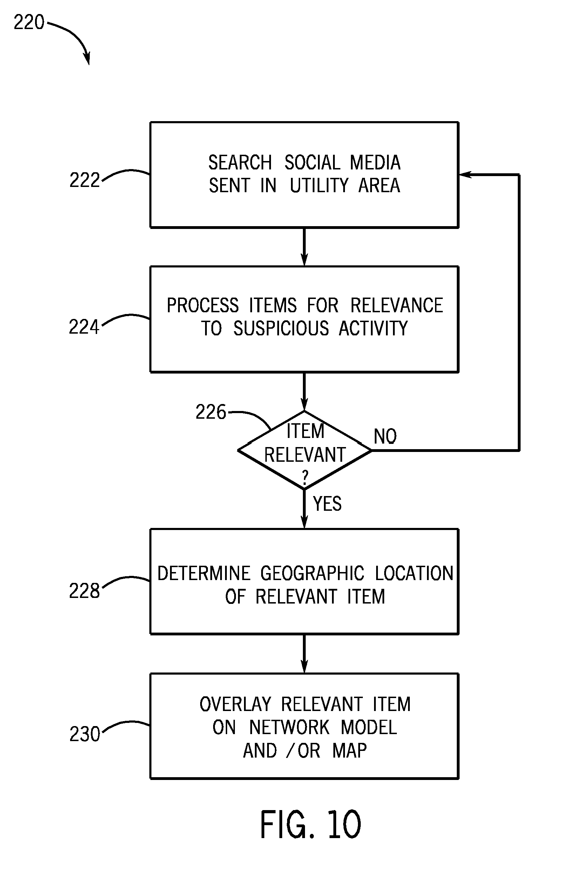

As mentioned, the social media analysis system may detect suspicious activity relating to the utility network. FIG. 10 illustrates a flowchart 220 that closely corresponds to both FIG. 6 and FIG. 8. Specifically, block 222 corresponds to block 182 in FIG. 8 and block 142 in FIG. 6. Likewise, block 224 corresponds to block 144 in FIG. 6 and block 184 in FIG. 8. However, in the method illustrated in FIG. 10, the processor 44 may filter the social media posts for data relating to suspicious activity around electric power lines, equipment, and facilities. While filtering the social media posts, the processor 44 may scan each post for keywords, pictures, videos, locations, historical patterns, and other data that would indicate signs of suspicious activity around the utility network. Blocks 226, 228, and 230 of FIG. 10 directly correspond to blocks 146, 148, and 150 of FIG. 6, and blocks 186, 188, and 190 of FIG. 8. The processor 44 may determine if the social media posts are relevant, determine the geographic location of each relevant post, and overlay the relevant post on the network model or map displayed on the user experience interaction interface 130. Additionally, like the embodiment of FIG. 8, the processor 44 may store a location and activity pair in storage 48 when a social media post is determined to relate to suspicious activity around utility network assets. The processor 44 may associate the location and activity pair with the recorded damage in a utility asset management record. If a location and activity pair is detected by the processor 44, and there is a previous instance of a location and activity pair in that location, the social media post is flagged to indicate a high probability of damage, improving the accuracy and efficiency of damage detection.

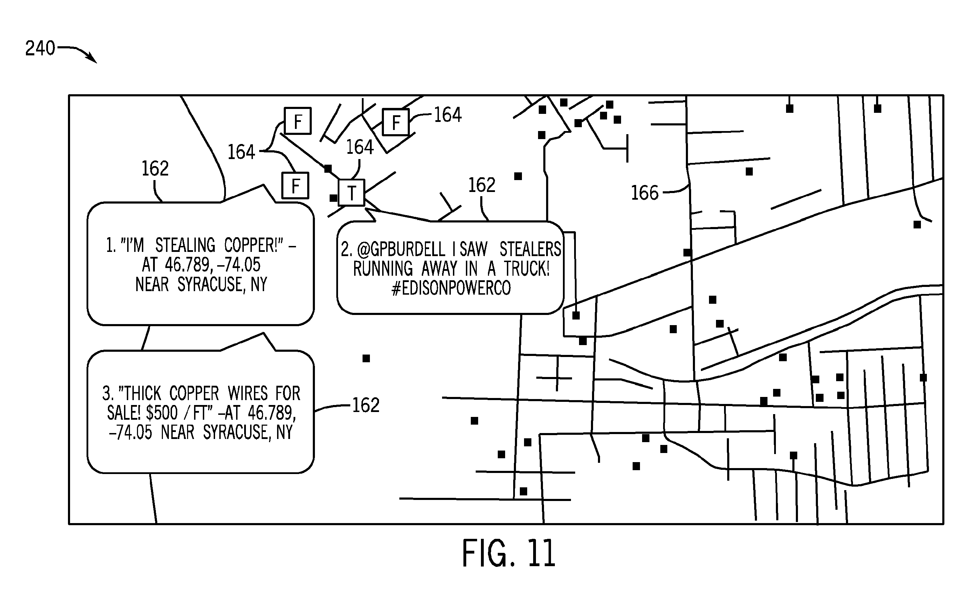

FIG. 11 illustrates a map 240 that may be displayed on the user experience interaction interface 130 including the same components of the map 160 of FIG. 7 and the map 200 of FIG. 9. However, the social media posts 162 of FIG. 11 relate specifically to suspicious activity around utility networks rather than utility network hazards or the utility network as a whole.

Technical effects of embodiments include improved utility management using social network information. For instance, a power outage detection system may use social network mining to quickly and efficiently detect and respond to power outage events. Particularly, the system may include a social mining engine to acquire and filter through data from social networking sites. A series of outage detection components and outage analysis engines may analyze and process the data retrieved by the social mining engine to detect outage events, and in the case of an outage event, determine the location of a utility fault, an area affected by the fault, and a possible cause of the fault. This data may allow response teams to respond quickly and accurately to a power outage event.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A computer -implemented method, comprising:
filtering social media posts (104) of a social network to ascertain social media posts (162) relevant to a utility network (10); and
determining that a utility network event has occurred based at least in part on the relevant social media posts (162).

2. The method of claim 1, comprising associating the relevant social media posts (162) with locations on the utility network (10) to determine where the utility network event has occurred.

3. The method of claim 1 or 2, comprising:
comparing social media account information of the social media posts (162) to utility customer account information; and
associating the social media account with a utility customer account when the information in the social media account and the utility customer account information overlap or when the geolocation data in the social media posts (162) made by the social media account corresponds to an address in the utility customer account, or both.

4. The method of any of claims 1 to 3, further comprising:
determining the geographic location of a social media post (162) using an address of a utility customer account associated with a social media account that posted the social media post (162).

5. The method of any of claims 1 to 4, comprising overlaying the social media posts (162) relevant to the utility network (10) over a network model (124) representing the utility network (10) or a map of an area of the utility network (10), or both, on locations where users were located while posting the social media posts (162).

6. The method of claim 5, wherein the social media posts (104) are filtered to ascertain information relevant to utility network outages.

7. The method of claim 5 or 6, wherein the social media posts (104) are filtered to ascertain information relevant to utility network hazards.

8. The method of any of claims 5 to 7, wherein the social media posts (104) are filtered to ascertain information relevant to suspicious activity around the utility network (10).

9. A computer program comprising computer program code means adapted to perform the method of any of claims 1 to 8 when executed by a computer.

10. The computer program of claim 9, embodied on a computer-readable medium.

11. A computer system:
a storage configured to store the computer program of claims 9 or 10; and
a processor configured to execute the computer program stored by the storage, to perfrom the method of any of claims 1 to 8.
